# EUROPÄISCHE PATENTSCHRIFT

(11) **EP 0 552 434 B1**
(45) Veröffentlichungstag und Bekanntmachung des Hinweises auf die Patenterteilung: **28.08.1996**
(21) Anmeldenummer: 92119425.4
(22) Anmeldetag: 13.11.1992
(51) Int. Cl.: F24D 13/02, A47C 7/74

(54) **Heizlehne**
Heated backrest
Dossier chauffant

(30) Priorität: 23.01.1992 DE 9200761 U
(43) Veröffentlichungstag der Anmeldung: 28.07.1993
(73) Patentinhaber: Linser, Peter, Dipl.-Ing., A-6020 Innsbruck (AT)
(72) Erfinder: Linser, Peter, Dipl.-Ing., A-6020 Innsbruck (AT)
(74) Vertreter: Hofinger, Engelbert, DDr.

(56) Entgegenhaltungen:
- EP-A- 0 271 886
- CH-A- 174 950
- CH-A- 471 565

## Beschreibung

An der Wand anzubringende Heizkörper sind in verschiedensten Ausführungen bekannt. Üblicherweise dienen solche Heizkörper der Erwärmung der Raumluft, was bedeutet, daß sie auf eine derart hohe Temperatur gebracht werden müssen, daß ein dauernder Kontakt von Personen mit diesen Heizkörpern nicht möglich ist. Dies gilt auch für die Einrichtung nach EP-A2-0 271 886, welche an der Rückseite einer Wärmeübertragungsplatte aus Stein einen Tragrahmen zur Befestigung an einer Wand aufweist.

Es ist auch bereits vorgeschlagen worden, Sitzmöbel auf eine für den Benützer angenehme Temperatur zu erhitzen. Möbel mit eingebauter Heizung sind jedoch in ihrem Aussehen von der Fabrik weg eindeutig festgelegt und somit kaum verkäuflich, da sie nur zufällig in einen vorgegebenen Raum passen, wenn sie entsprechend der geringen Nachfrage in vertretbaren Stückzahlen und folglich ganz wenigen Varianten hergestellt werden.

Wesentlich größere Gestaltungsfreiheit als vorgefertigte beheizbare Möbel bietet sich dem Innenarchitekten, wenn Warmluft, beispielsweise aus einem Kachelofen, durch Hohlwände geleitet wird, welche Teile von Sitzmöbeln bilden. Nahezu der Idealfall eines beheizten Sitzmöbels ist die Ofenbank eines Kachelofens. An derartigen Ofenbänken ist allerdings nachteilig, daß sie nicht entlang einer Wand angeordnet sein können, obwohl Sitzbänke gerade für eine derartige Anordnung, insbesondere zur Bildung von Sitzecken, prädestiniert sind. Überdies ist natürlich auch bei Kachelöfen die gewählte Temperatur primär auf die gewünschte Raumtemperatur abgestimmt und damit für die Verwendung der Ofenbank als Sitzmöbel oft zu hoch oder zu niedrig.

Die Erfindung soll es ermöglichen, Bänke nach Art einer Ofenbank entlang beliebiger Wände anzuordnen. Hiezu ist vorgesehen, daß die Vorderseite des Heizkörpers sich nach oben hin dem Tragrahmen annähert, so daß die Vorderseite nach oben gegen die Rückseite hin geneigt ist und daß der Heizkörper solche Abmessungen aufweist, daß er als Rückenlehne einer Sitzbank verwendbar ist.

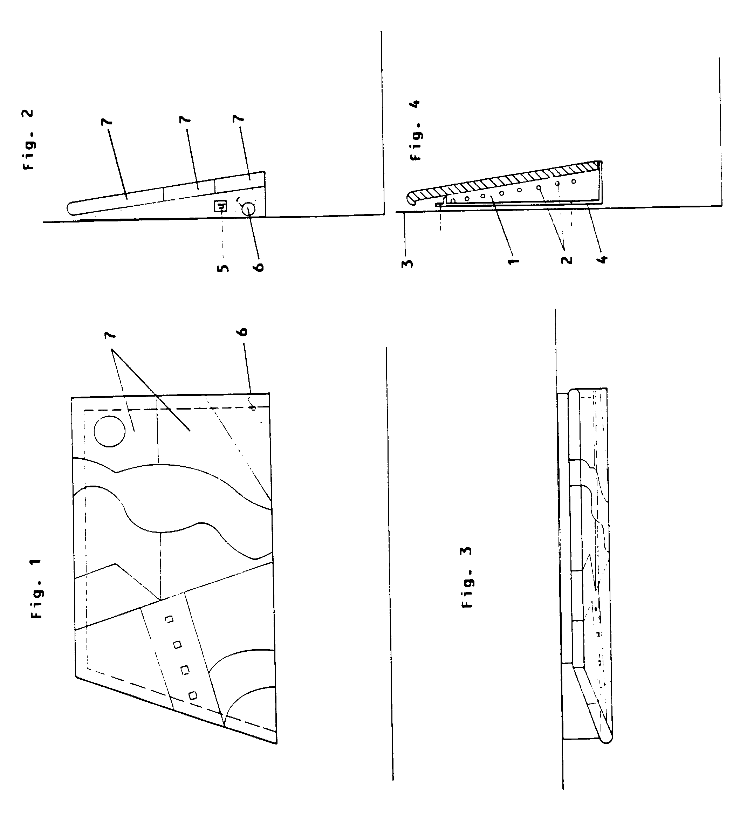

Weitere Einzelheiten der Erfindung werden anschließend anhand der Zeichnung erläutert. In dieser ist
Fig. 1 die Vorderansicht einer erfindungsgemäßen Heizlehne, Fig. 2 die zugehörige Seitenansicht, Fig. 3 eine Draufsicht und Fig. 4 ein Vertikalschnitt in Seitenansicht.

Die dargestellte Heizlehne besteht, wie insbesondere aus Fig. 4 hervorgeht, aus einem Heizkörper 1 aus Schamotte oder Mörtel, in welche Heizdrähte 2 eingesetzt sind. Anstelle von Heizdrähten könnten im Rahmen der Erfindung auch von heißem Gas oder heißer Flüssigkeit durchflossene Rohrschlangen vorgesehen sein. Ihre Festigkeit und die Möglichkeit zur Aufhängung an einer Wand 3 erhält die dargestellte Heizlehne durch einen Tragrahmen 4 aus Metall und gegebenenfalls durch weitere in den Grundkörper eingebaute Bewehrungen. Der Heizkörper kann zentral gesteuert oder individuell mit einem Thermostaten 5 bzw. einem Ein- und Aus-Schalter 6 versehen sein. Die nach oben schräg zurückgeneigte Vorderseite der Heizlehne wird durch Kacheln 7 gebildet. Diese weisen im dargestellten Fall ganz verschiedene Formen auf, was es ermöglicht, die Sichtfläche der Heizlehne in Farbe und Form abwechslungsreich zu gestalten.

Die Befestigung der dargestellten Heizlehne an einer Wand 3 kann in herkömmlicher Form durch Mauerhaken od.dgl. erfolgen und bedarf keiner weiteren Erläuterung.

Die Ergänzung der dargestellten Heizlehne zu einer fertigen Bank ist nicht Gegenstand der Erfindung. Die neue Heizlehne kann mit beliebigen Sitzteilen, also mit Holzbänken, tapezierten oder lederbezogenen Bänken verschiedener Form kombiniert werden. Insbesondere ist es möglich, aus bestehenden Sitzecken die bisher vorgesehenen Rückenlehnen nachträglich zu entfernen und durch die Erfindung zu ersetzen.

## Patentansprüche

1. Zur Befestigung an einer Wand geeigneter Heizkörper mit einer Vorderseite aus Fliesen oder Kacheln und einem an der Rückseite angeordneten Tragrahmen, dadurch gekennzeichnet, daß die Vorderseite des Heizkörpers sich nach oben hin dem Tragrahmen annähert, so daß die Vorderseite nach oben gegen die Rückseite hin geneigt ist und daß der Heizkörper solche Abmessungen aufweist, daß er als Rückenlehne einer Sitzbank verwendbar ist.

## Claims

1. A heating body suitable for fixing to a wall, with a front side of tiles or stove tiles and a carrier frame arranged at the rear side, characterised in that the front side of the heating body comes closer to the carrier frame in an upward direction so that the front side is inclined upwardly towards the rear side and that the heating body is of such dimensions that it can be used as the backrest of a bench seat.

## Revendications

1. Elément de chauffage, pouvant être fixé contre un mur, comprenant une face avant, revêtue de carrelage ou de carreaux de faïence, et un cadre de support, monté sur la face arrière, caractérisé en ce que la face avant de l'élément de chauffage se rapproche vers le haut du cadre de support, de telle sorte que la face avant, en allant vers le haut, est inclinée vers la face arrière, et en ce que les dimensions de l'élément de chauffage sont définies de telle sorte que ce dernier puisse être utilisé comme le dossier d'un banc.
